# EUROPEAN PATENT APPLICATION

(11) **EP 2 023 217 A2**
(43) Date of publication of application: **11.02.2009**
(21) Application number: 08155989.0
(22) Date of filing: 09.05.2008
(51) Int. Cl.: G04G 1/02, G04G 1/06, G04G 1/10

(54) **Wristwatch-type mobile device**

(30) Priority: 25.07.2007 KR 20070074386
(71) Applicant: Electronics and Telecommunications Research Institute, Yuseong-gu, Daejeon 305-700 (KR)
(72) Inventor: You, In-Kyu, Daejeon (KR); Koo, Jae-Bon, Daejeon (KR); Kang, Seung-Youl, Daejeon (KR); Cho, Kyoung-Ik, Daejeon (KR); Suh, Kyung-Soo, Daejeon (KR); Lee, Jin-Ho, Daejeon (KR)
(74) Representative: Betten & Resch

(57) **Abstract**

Provided is a wristwatch-type mobile device. The wristwatch-type mobile device includes a wristwatch device, a mobile device, and an I/O device. The I/O device is selectively used as one of an output device of the wristwatch device and an I/O device of the mobile device.

## Description

### CROSS-REFERENCE TO RELATED APPLICATIONS

This patent application claims priority of Korean Patent Application No. 10-2007-74386, filed on July 25, 2007, the entire contents of which are hereby incorporated by reference.

### BACKGROUND OF THE INVENTION

The present invention disclosed herein relates to a mobile device, and more particularly, to a wristwatch-type mobile device.

The present invention has been derived from a research undertaken as a part of the information technology (IT) development business by Ministry of Information and Communication and Institute for Information Technology Advancement, Republic of Korea (Project management No.: 2005-S-070-03, Project title: Flexible dispiay).

An example of a wristwatch mobile phone is publicly known in British Patent Application No. 2,171,821. The combination of an electronic wristwatch and a two-way radio communication system is disclosed in British Patent Application No. 2,71,821. A wristwatch strap includes an antenna. As disclosed in British Patent Application No. 2,171,821, the casing of a wristwatch includes a microphone, an LCD display, and a two-way phone circuit. Mobile communication is allowed between subscribers of a phone system supporting this type of wristwatch mobile phone.

However, it is not easy to suitably mount a display device of a mobile device on a wristwatch. This limitation makes it difficult to wear a typical wristwatch-type mobile device like a wristwatch.

Also, unlike a general mobile device, the typical wristwatch-type mobile device does not have a sufficient space for a variety of additional services. There is a spatial limitation in providing a variety of consumer-centered services such as medical services, banking services, and entertainment information services.

What is also required is a sufficient-capacity battery capable of supplying power necessary to drive a wristwatch-type mobile device.

### SUMMARY OF THE INVENTION

The present invention provides a wristwatch-type mobile device that is easily wearable.

The present invention also provides a wristwatch-type mobile device that can provide a variety of additional services.

The present invention also provides a wristwatch-type mobile device that has a sufficient-capacity battery capable of supplying power necessary to drive the mobile device.

A wristwatch-type mobile device according to embodiments of the present invention includes: a slot into which a slot-type card can be inserted; a transparent keypad; a transparent display; and a function selection button.

Embodiments of the present invention provide wristwatch-type mobile devices including: a wristwatch device; a mobile device; and an I/O device selectively used as one of an output device of the wristwatch device and an I/O device of the mobile device.

In some embodiments, the I/O device of the mobile device includes a transparent keypad and a transparent display device.

In other embodiments, the wristwatch-type mobile device further includes a function selection device for selecting the I/O device as one of the output device of the wristwatch device and the I/O device of the mobile device.

In further embodiments, the wristwatch-type mobile device further includes a platform where the wristwatch device and the mobile device are disposed.

In still further embodiments, the platform includes at lease one slot into which slot-type cards for providing additional services are inserted.

In still further embodiments, the platform includes a slot into which a battery card for supplying power necessary for the wristwatch is inserted.

In still further embodiments, the slot for the battery card has a charge jack for charging the battery card.

In still further embodiments, the function selection device includes a function selection button for selecting the I/O device as one of the output device of the wristwatch device and the I/O device of the mobile device.

In still further embodiments, the function selection device automatically selects the I/O device as the keypad and the display device of the mobile device when a wireless communication reception signal is detected.

In still further embodiments, the display device is fabricated using a transparent oxide semiconductor as a driving device.

In still further embodiments, the keypad is a touch pad type keypad that is fabricated by stacking transparent electrodes formed of one of ITO, IZO and ITZO.

In still further embodiments, the wristwatch is an analog watch, and an output device of the analog watch is formed of transparent material so that an hour hand, a minute hand and a second hand are viewable through the output device of the analog watch.

In still further embodiments, the wristwatch is a digital watch, and the digital watch shares the transparent display device as an output device.

In still further embodiments, the mobile device includes a video camera, and the video camera is automatically enabled to transmit the picture of a user in a transmission mode of the mobile device.

In still further embodiments, the I/O device includes an input sensor of a micro-ball mouse and a scroll touch panel.

### BRIEF DESCRIPTION OF THE FIGURES

The accompanying figures are included to provide a further understanding of the present invention, and are incorporated in and constitute a part of this specification. The drawings illustrate exemplary embodiments of the present invention and, together with the description, serve to explain principles of the present invention. In the figures:

FIG. 1 is a block diagram of a wristwatch-type mobile device according to an embodiment of the present invention;

FIG. 2 is a block diagram of a mobile device according to an embodiment of the present invention;

FIG. 3 is a plan view of a wristwatch-type mobile device according to an embodiment of the present invention;

FIG. 4 is a side view of a wristwatch-type mobile device according to an embodiment of the present invention;

FIG. 5 is a view showing a slot cover that covers a slot disposed in a platform;

FIG. 6 is a view showing a condition where an I/O output device of the wristwatch-type mobile device is converted into a keypad of a mobile device;

FIG. 7 is a view showing a condition where a call connection is made with an opponent party in case of the success of transmission in FIG. 6;

FIG. 8 is a view showing a case wherein the I/O device is to be converted into a display device of a game mode; and

FIG. 9 is a view showing an embodiment of cards that are inserted into a slot of the wristwatch-type mobile device.

### DETAILED DESCRIPTION OF PREFERRED EMBODIMENTS

Preferred embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Hereinafter, exemplary embodiments of the present invention will be described in detail with reference to the accompanying drawings.

A wristwatch-type mobile device according to the present invention can select an input/output (I/O) device as an I/O device for one of a wristwatch device, a mobile device, and an additional service device. Herein, the additional service device is a card inserted into a slot.

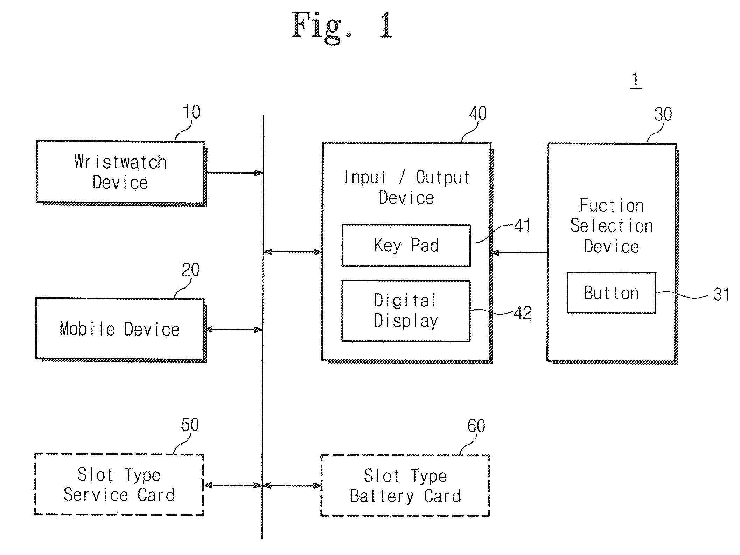

FIG. 1 is a block diagram of a wristwatch-type mobile device 1 according to an embodiment of the present invention. Referring to FIG. 1, the wristwatch-type mobile device 1 includes a wristwatch device 10, a mobile device 20, a function selection device 30, and an I/O device 40. The function selection device 30 selects the I/O device 40 as an I/O device for one of the wristwatch device 10 and the mobile device 20. Herein, the function selection device 30 may be selected by pushing a function selection button 31 by a user. For example, if the function selection button 31 is pressed one time by the user, the I/O device 40 is used as an output device 42 for the wristwatch device 10. On the other hand, if the function selection button 31 is pressed for a long time by the user, the I/O device 40 is used as an input device 41 for the mobile device 20.

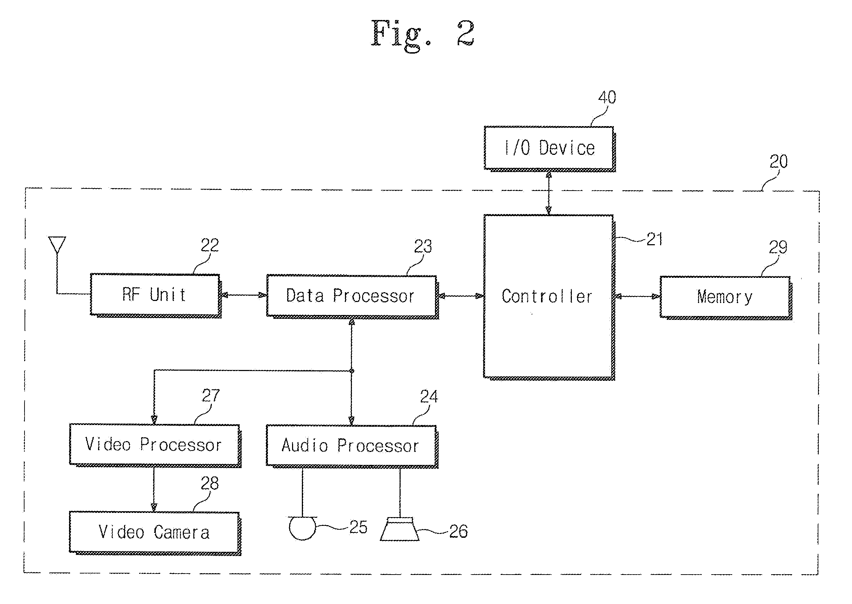

The wristwatch device 10 is one of an analog watch and a digital watch. As is well-known in the art, the analog watch has an hour hand, a minute hand and a second hand and may be implemented in a windup spring type or in a crystal vibration type. As is well-known in the art, the digital watch displays the time in number and may be implemented in a crystal vibration type. If the wristwatch device 10 is an analog watch, an hour hand, a minute hand and a second hand is shown through the I/O device 40 to the user. In this case, the I/O device 40 is transparent like glass, which will be described later in detail with reference to FIG. 2. If the wristwatch device 10 is a digital watch, the time is displayed on the I/O device 40.

The wristwatch device 10 includes a separate battery (not illustrated) for a driving operation. Herein, the battery of the wristwatch device 10 may be a battery used in a general wristwatch, to which the present invention is not limited. The battery of the wristwatch device 10 may be a rechargeable battery. For example, the battery of the wristwatch device 10 may be a rechargeable battery that is automatically charged through a slot-type battery card 60 illustrated in FIG. 1.

An analog watch requires compensation for accurate time display. In general, a windup spring-type watch is driven using the elasticity of a metallic windup spring. However, because metal expands or shrinks depending on the ambient temperature, the metallic windup spring causes a time error with the seasons. Also, because crystal expands or shrinks depending on the ambient temperature, a crystal vibration-type watch cannot be said to be absolutely accurate. To address this limitation, the wristwatch device 10 may further include a circuit that can automatically compensate the time by receiving the accurate time information of the mobile device 20. A method for compensating the time for an analog watch is disclosed in Korean Patent Publication No. 10-2004-0049988 entitled "DEVICE AND METHOD FOR ADJUSTING TIME IN WIRELESSTELEPHONE HAVING AN ANALOGUE WATCH", the contents of which are incorporated herein by reference.

The mobile device 20 is used to perform wireless communication between users. The mobile device 20 does not include a keypad and a display device that are used in a typical mobile device. The reason for this is that the mobile device 20 uses the shared I/O device 40 instead of a keypad and a display device. FIG. 2 is a block diagram of the mobile device 20 according to an embodiment of the present invention. Referring to FIG. 2, the mobile device 20 includes a controller 21, a radio frequency (RF) unit 22, a data processor 23, an audio processor 24, a microphone 25, a speaker 26, a video processor 27, a video camera 28, and a memory 29. The mobile device 20 uses the I/O device 40 as a keypad and a display device according to the selection by the function selection device 30.

The controller 21 controls the overall operations of the mobile device 20 and the I/O device 40. The controller 21 may include the data processor 23. The RF unit 22 performs a communication operation of the mobile device 20. The RF unit 22 includes: an RF transmitter for upconverting /amplifying a signal to be transmitted; and an RF receiver for low-noise amplifying/downconverting a received signal. The data processor 23 includes: a transmitter for encoding/modulating a signal to be transmitted; and a receiver for demodulating/decoding the received signal. For example, the data processor 23 may include a modem and a codec. The audio processor 24 reproduces an RX audio signal output from the data processor 23 at the speaker 26, and transmits a TX audio signal output from the microphone 25 to the data processor 23. The video processor 27 reproduces an RX video signal output from the data processor 23 at the I/O device 40, and transmits a TX video signal output from the video camera 28 to the data processor 23. The memory 29 may include a program memory and a data memory. The program memory stores programs for controlling a general operation of the mobile device 20. The program memory may be implemented using a nonvolatile memory such as MRAM, PRAM, and FLASH. The data memory temporarily stores data that are generated during the execution of programs. The data memory may be implemented using a volatile memory such as SRAM and DRAM.

The mobile device 20 shares the I/O device 40 with the wristwatch device 10 and a slot-type service card 50. If the function selection device 30 selects the I/O device 40 as an I/O device for the mobile device 20, the I/O device 40 is used as a keypad 41 and a display device 42 of the mobile device 40. The keypad 41 includes: keys for inputting numerals and characters; and function keys for setting a variety of functions. The display device 42 displays character/video data of the mobile device 20.

The keypad 41 and the display device 42 of the mobile device 20 may be formed on a transparent cover of the wristwatch device 10. The transparent cover may be formed of glass or thin solid flexible materials such as metal-foils and plastic materials. The I/O device 40 may be implemented using digital displays such as LCDs, OLEDs, electronic papers, and transparent electronic windows. For example, when the I/O device 40 is implemented using a transparent electronic window, the I/O device 40 displays the time of the wristwatch device 10 and can be used as the keypad 41 and the display device 42 of the mobile device 20.

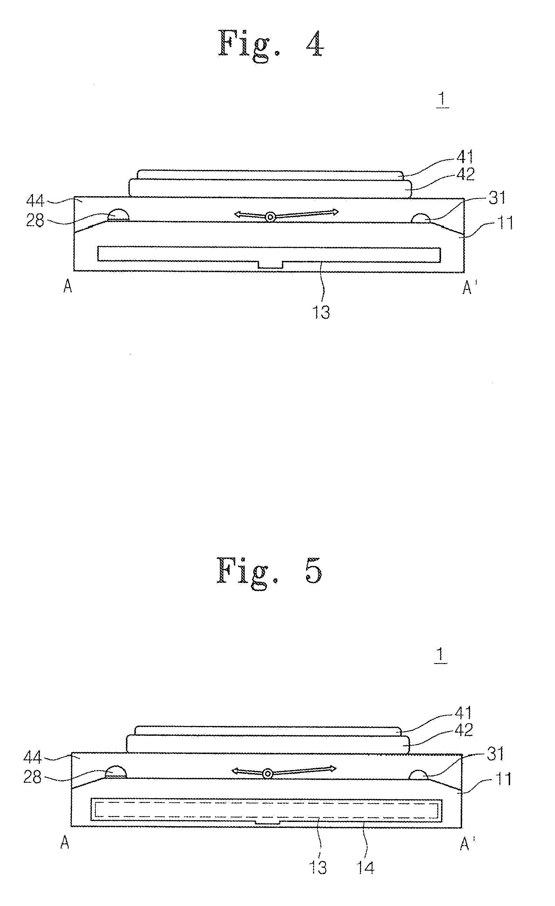

A platform 11 (see FIG. 4) of the wristwatch-type mobile device 1 is provided with a slot 13 (see FIG. 4) into which slot-type service cards can be inserted. The wristwatch-type mobile device 1 can provide a variety of additional services by means of the slot-type service cards. Examples of the slot-type service card include game cards, MP3 cards, TV cards, and sensor cards. For example, if the slot-type service card is a card including a medical card for measuring blood pressure, blood sugar, and pulses, the wristwatch-type mobile device 1 can serve as a portable medical measurement device. Herein, the slot-type service card 50 may be used as the I/O device 40 according to the selection by the function selection device 30.

The mobile device 20 illustrated in FIG. 1 is installed in the platform 11, to which the present invention is not limited. The mobile device 20 may be implemented using a slot-type card. Thus, the mobile device service may be provided when the mobile device card is inserted into the slot 13.

The wristwatch-type mobile device 1 has a slot into which the slot-type battery card 60 can be inserted. Herein, the battery slot may be provided separately or may be identical to a slot for providing another additional service. The battery slot may have a separate charge jack for charging the battery card 60. Herein, the battery card 60 is used as a main power source for supplying power necessary to drive the wristwatch-type mobile device 1. In particular, the battery card 60 is used as a main power source of the mobile device 20.

The wristwatch-type mobile device 1 has the I/O device that is shared by the wristwatch device 10, the mobile device 20, and the slot-type service card 50. According to the selection by the function selection device 30, the I/O device 40 is used as an output device of the wristwatch device 10, the keypad 41 and the display device 42 of the mobile device 20, or an I/O deice of the slot-type service card 50.

The wristwatch-type mobile device 1 has a slot into which a slot-type service card can be inserted, and thus can be provided with a variety of additional services. Thus, it is possible to overcome the spatial limitation of the wristwatch-type mobile device 1 that may be caused by the provision of a variety of additional services. The wristwatch-type mobile device 1 has a slot into which the slot-type battery card 60 can be inserted, thereby making it possible to conveniently supply necessary power.

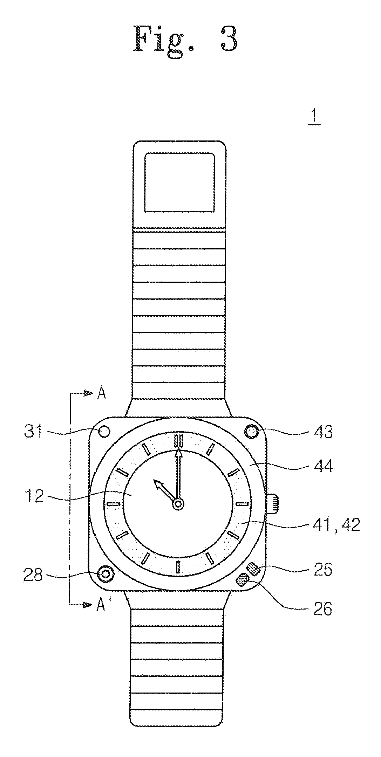

FIG. 3 is a plan view of the wristwatch-type mobile device 1 according to an embodiment of the present invention. The wristwatch-type mobile device 1 includes the wristwatch device 10 having an analog watch. Referring to FIG. 3, the platform 11 of the wristwatch-type mobile device 1 includes an analog watch hand panel 12, a microphone 25, a speaker 26, a video camera 28, a function selection button 31, a keypad 41, a display device 42, a micro-ball mouse 43, and a scroll touch panel 44. Herein, the keypad 41, the display device 42, the micro-ball mouse 43, and the scroll touch panel 44 are included in the I/O device 40, and the micro-ball mouse 43 and the scroll touch panel 44 serve as an input device.

The keypad 41 and the display device 42 are formed of transparent materials to display the time of an analog watch. For example, the keypad 41 and the display device 42 are implemented using thin-film LCDs or organic ELs. The I/O device 40 of FIG. 3 is implemented by fabricating a transparent keypad 41 at a glass plate on the analog watch. The I/O device 40 is implemented on a substrate using a glass substrate, a plastic substrate, or a metal foil. In particular, the transparent keypad 41 of the I/O device 40 is fabricated using a transparent electrode. When an analog watch is provided as illustrated in FIG. 3, the keypad 41 is fabricated on the glass substrate of the analog watch by using a transparent electrode. The transparent electrode for fabricating a keypad on an analog watch or a digital watch may be formed of organic conductive materials such as Indium Tin Oxide (ITO), Zinc Tin Oxide (IZO), Indium Tin Zinc Oxide (ITZO), and PEDOT:PSS. The wristwatch-type mobile device 1 is shown as a general analog watch in a normal mode, as illustrated in FIG. 3.

A wristwatch device illustrated in FIG. 3 is an analog watch, to which the present invention is not limited. The wristwatch-type mobile device 1 may include a digital watch. The wristwatch-type mobile device 1 including a digital watch displays a screen, in which the times is indicated in a watch hand type or in a numeral type, on the display device 42 in a normal mode. If the function selection button 31 is pressed or if an RX signal is received, the I/O device 40 of the wristwatch-type mobile device 1 is automatically used as the keypad 41 and the display device 40 of the mobile device 20.

FIG. 4 is a side view of the wristwatch-type mobile device 1 according to an embodiment of the present invention. Referring to FIG. 1, the keypad 41 is implemented on the display device 42 in the wristwatch-type mobile device 1. The slot 13 is disposed on the side of a platform 11. Herein, a plurality of cards may be inserted into the slot 13. FIG. 4 illustrates only one slot for convenience of description. The wristwatch-type mobile device 1 has the slot 13 into which the card 50 for providing an additional service and the battery card 60 provided for an overall operation of the wristwatch-type mobile device 1 can be inserted. In particular, the slot into which the battery card 60 can be inserted is designed in such a way that a charge jack can be inserted into the slot. FIG. 5 is a view showing a slot cover 14 that covers the slot 13. Herein, the slot cover 14 may be implemented using waterproof rubber.

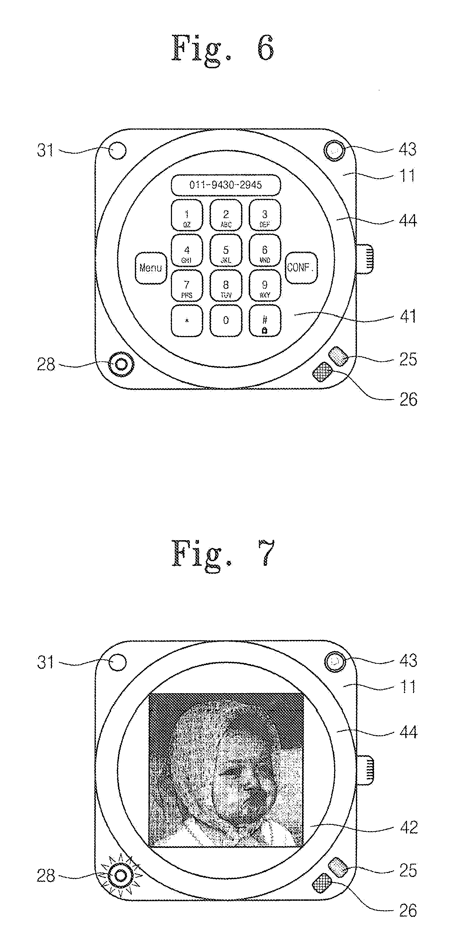

FIG. 6 is a view showing a condition where the I/O output device 40 of the wristwatch-type mobile device 1 is converted into the keypad 41 of the mobile device 20. Referring to FIG. 6, the keypad 41 is in a condition where a desired phone number is selected and a confirmation pad is pressed. An addition function for displaying a transmitted phone number is implemented on the keypad 41, to which the present invention is not limited.

FIG. 7 is a view showing a condition where a call connection is made with an opponent party in case of the success of transmission in FIG. 6. Referring to FIG. 7, the mobile device 20 transmits a video picture of a transmitter through the video camera 28. That is, at the start of the call with the opponent party, the video camera 28 is automatically enabled to transmit the video information of the transmitter to a receiver. In the case of a receiver with the same wristwatch-type mobile device, a video picture of the receiver is transmitted through a video camera of the receiver. Referring again to FIG. 7, a video picture of the receiver is displayed on the display device 42. Thus, a transmitter and a receiver having a wristwatch-type mobile device including the mobile device 20 according to the present invention can perform video call while viewing each other's figure. If video call is not desired, the function selection button 31 or a specific button of the keypad 41 is pressed to disappear the video picture of the mobile device 20.

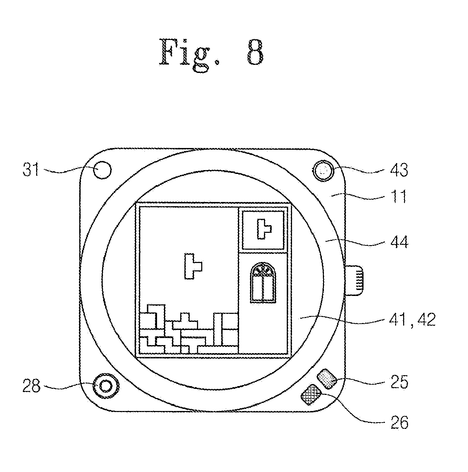

FIG. 8 is a view showing a case wherein the I/O device 40 is to be converted into a display device of a game mode. Herein, the game mode is executed by inserting a game card (not shown) into the slot 13 and pressing a specific button (e.g., a function selection button). Referring to FIG. 8, the game card is implemented in such a way that the micro-ball mouse 43 or the scroll touch panel 44 is used to perform a game in a game mode.

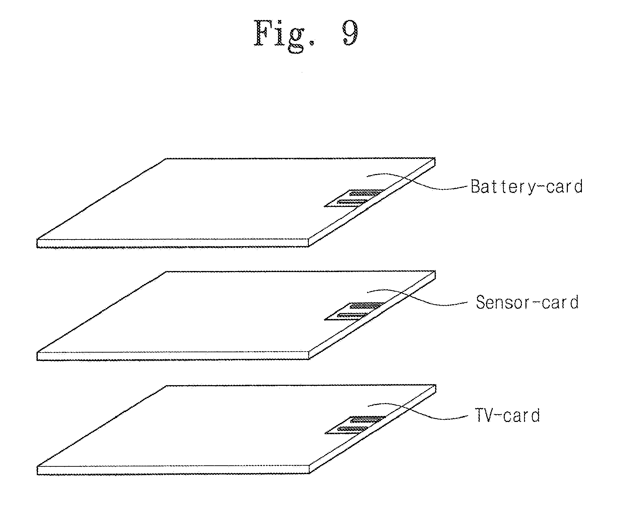

FIG. 9 is a view showing an embodiment of cards that are inserted into the slot 13 of the wristwatch-type mobile device 1. Referring to FIG. 9, the cards include a slot-type battery card, a sensor card, and a TV card.

The mobile device of the present invention may be a cellular phone or a PDA phone. The wristwatch-type mobile device of the present invention includes a wristwatch device, a mobile device, independent sensor input devices, a transparent display, a transparent keypad, and a driving circuit board of handy phones and PDAs. The sensor input devices of the present invention can be attached/detached to/from the platform. The transparent display is used to provide the outputs of the wristwatch, the mobile device, and a card for providing an additional service.

Thus, the wristwatch of the present invention can increase the body wearability, the mobility of a handy phone and a PDA, and the convenience of use. Also, because various sensor I/O devices can be attached and detached, a wristwatch providing a variety of additional services can be implemented. Specifically, because the mobile device is a wristwatch type, the inconvenience in moving the mobile device can be removed. Also, a wristwatch having high functionality and a variety of additional functions can be fabricated by attaching the various sensor I/O devices to the platform of the wristwatch.

As described above, the wristwatch-type mobile device according to the present invention has the slot-type stacked structure, the transparent display, and the additional function buttons. Therefore, the wristwatch-type mobile device is easily wearable even when it includes the mobile device. Also, the wristwatch-type mobile device can provide a variety of additional services using the slot-type card. Also, the present invention can provide the slot-type battery.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A wristwatch-type mobile device comprising:
a wristwatch device;
a mobile device; and
an input/output (I/O) device selectively used as one of an output device of the wristwatch device and an I/O device of the mobile device.

2. The wristwatch-type mobile device of claim 1, wherein the I/O device of the mobile device comprises a transparent keypad and a transparent display device.

3. The wristwatch-type mobile device of any of the preceding claims, further comprising a function selection device for selecting the I/O device as one of the output device of the wristwatch device and the I/O device of the mobile device.

4. The wristwatch-type mobile device of any of the preceding claims, further comprising a platform where the wristwatch device and the mobile device are disposed.

5. The wristwatch-type mobile device of claim 4, wherein the platform comprises at least one slot into which slot-type cards for providing additional services are inserted.

6. The wristwatch-type mobile device of claim 4 or 5, wherein the platform comprises a slot into which a battery card for supplying power necessary for the wristwatch is inserted.

7. The wristwatch-type mobile device of claim 6, wherein the slot for the battery card has a charge jack for charging the battery card.

8. The wristwatch-type mobile device of any of claims 3 to 7, wherein the function selection device comprises a function selection button for selecting the I/O device as one of the output device of the wristwatch device and the I/O device of the mobile device.

9. The wristwatch-type mobile device of claim 8, wherein the function selection device automatically selects the I/O device as the keypad and the display device of the mobile device when a wireless communication reception signal is detected.

10. The wristwatch-type mobile device of any of the preceding claims, wherein the display device is fabricated using a transparent oxide semiconductor as a driving device.

11. The wristwatch-type mobile device of any of the preceding claims, wherein the keypad is a touch pad type keypad that is fabricated by stacking transparent electrodes formed of one of ITO, IZO and ITZO.

12. The wristwatch-type mobile device of any of the preceding claims, wherein the wristwatch is an analog watch, and an output device of the analog watch is formed of transparent material so that an hour hand, a minute hand and a second hand are viewable through the output device of the analog watch.

13. The wristwatch-type mobile device of any of claims 1 to 11, wherein the wristwatch is a digital watch, and the digital watch shares the transparent display device as an output device.

14. The wristwatch-type mobile device of any of the preceding claims, wherein the mobile device comprises a video camera, and the video camera is automatically enabled to transmit the picture of a user in a transmission mode of the mobile device.

15. The wristwatch-type mobile device of any of the preceding claims, wherein the I/O device comprises an input sensor of a micro-ball mouse and a scroll touch panel.
